# EUROPÄISCHE PATENTSCHRIFT

(11) **EP 1 492 008 B1**
(45) Veröffentlichungstag und Bekanntmachung des Hinweises auf die Patenterteilung: **13.07.2011**
(21) Anmeldenummer: 04012565.0
(22) Anmeldetag: 27.05.2004
(51) Int. Cl.: G06F 11/14, G06F 11/07, G06F 9/445, G06K 19/07

(54) **Behandlung eines Fehlerereignisses bei der Installation eines Anwendungsprogramms in einem tragbaren Datenträger**
Error event handling during installation of an application program in a portable data carrier
Traitement d'événements d'erreurs lors de l'installation d'un programme applicatif dans un support de données portatif

(30) Priorität: 28.05.2003 DE 10324384
(43) Veröffentlichungstag der Anmeldung: 29.12.2004
(73) Patentinhaber: Giesecke & Devrient GmbH, 81677 München (DE)
(72) Erfinder: Stocker, Thomas, 81825 München (DE); Vollmann, Siegfried, 82178 Puchheim (DE); Steinegger, Hartmut, 80803 München (DE)
(74) Vertreter: Klunker . Schmitt-Nilson . Hirsch

(56) Entgegenhaltungen:
- WO-A-00/43878
- WO-A-03/025753
- "CRASH RECOVERY FOR BETA RELEASE PROGRAMS" IBM TECHNICAL DISCLOSURE BULLETIN, IBM CORP. NEW YORK, US, Bd. 38, Nr. 3, 1. März 1995 (1995-03-01), Seite 49, XP000507973 ISSN: 0018-8689
- GAMMA ET AL: "Design Patterns - Elements of Reusable Object-Oriented Software - Command and Memento Pattern" DESIGN PATTERNS : ELEMENTS OF REUSABLE OBJECT-ORIENTED SOFTWARE, READING, MA : ADDISON-WESLEY; US, 1. Januar 1995 (1995-01-01), Seiten 233-242,283, XP002482253 ISBN: 978-0-201-63361-0
- ANONYMOUS: "LOGGING STATUS INFORMATION WHILE INSTALLING NEW SOFTWARE" IBM TECHNICAL DISCLOSURE BULLETIN, IBM CORP. NEW YORK, US, Bd. 34, Nr. 1, 1. Juni 1991 (1991-06-01), Seite 177, XP000210175 ISSN: 0018-8689
- SYSTA T: "Understanding the behavior of java programs" REVERSE ENGINEERING, 2000. PROCEEDINGS. SEVENTH WORKING CONFERENCE ON NOVEMBER 23-25, 2000, PISCATAWAY, NJ, USA,IEEE, 23. November 2000 (2000-11-23), Seiten 214-223, XP010527966 ISBN: 978-0-7695-0881-8
- JEAN-JACQUES VANDEWALLE ET AL: "Developing Smart Card-Based Applications Using Java Card" SMART CARD. RESEARCH AND APPLICATIONS LECTURE NOTES IN COMPUTER SCIENCE;;LNCS, SPRINGER, BERLIN, DE, Bd. 1820, 2000, Seiten 105-124, XP019048922 ISBN: 978-3-540-67923-3
- FODOR O ET AL: "JavaCard and OpenCard Framework: a tutorial" EMERGING TECHNOLOGIES AND FACTORY AUTOMATION, 1999. PROCEEDINGS. ETFA '99. 1999 7TH IEEE INTERNATIONAL CONFERENCE ON BARCELONA, SPAIN 18-21 OCT. 1999, PISCATAWAY, NJ, USA,IEEE, US, Bd. 1, 18. Oktober 1999 (1999-10-18), Seiten 13-22, XP010365871 ISBN: 978-0-7803-5670-2

## Beschreibung

Die Erfindung betrifft allgemein das technische Gebiet der Installation von Anwendungsprogrammen in einem tragbaren Datenträger und spezieller das Gebiet der Behandlung und Rückmeldung von Fehlerereignissen, die bei einer solchen Installation auftreten. Ein tragbarer Datenträger im Sinne des vorliegenden Dokuments kann insbesondere eine Chipkarte (*Smart Card*) in unterschiedlichen Bauformen oder ein Chipmodul sein.

Tragbare Datenträger, die eine Mehrzahl von Anwendungsprogrammen aufzunehmen vermögen, sind z.B. unter der Marke *Java Card™* bekannt. Das Dokument *"Java Card*™ 2.2 *Runtime Environment (JCRE) Specification",* Juni 2002, herausgegeben von der Firma Sun Microsystems, Inc., Palo Alto, USA, im Internet verfügbar unter *http:*//*java.sun.com*/*products*/*javacard,* beschreibt die in einer *Java Card* bereitgestellte Umgebung zur Ausführung solcher Anwendungsprogramme *(Java Card Applets).* Jedes Anwendungsprogramm weist eine Installationsmethode mit dem vorgegebenen Namen *install* auf, die eine Instanz des Anwendungsprogramms anlegt und in dem Datenträger registriert. Hierbei werden in der Regel auch alle Objekte und Speicherfelder, die während der gesamten Laufzeit des Anwendungsprogramms benötigt werden, in einem Speicher des Datenträgers angelegt. Der Installationsvorgang wird durch den Aufruf einer Methode mit dem vorgegebenen Namen *Applet.register* abgeschlossen.

Der gerade beschriebene Installationsvorgang kann aus unterschiedlichen Gründen fehlschlagen. Für die Fehlerdiagnose und Fehlerbehebung wäre es hilfreich, wenn der Datenträger eine Rückmeldung mit Informationen über das aufgetretene Fehlerereignis ausgeben würde. Diese Möglichkeit ist jedoch bei den hier in Rede stehenden Datenträgern nicht vorgesehen. Insbesondere kann das zu installierende Anwendungsprogramm während des laufenden Installationsvorgangs nicht auf einen Ausgabepuffer des Datenträgers zugreifen. Auch eine Speicherung der gewünschten Informationen durch das zu installierende Anwendungsprogramm scheidet aus, da der Datenträger nach dem Abbruch des Installationsversuchs einen Rückführvorgang durchführt. Bei diesem Rückführvorgang werden alle Daten, die während des Installationsversuchs angelegt wurden, gelöscht oder zumindest unzugänglich gemacht.

Zur Ermittlung von Fehlern in Chipkartenprogrammen ist aus der WO 03/ 025753 A2 der Vorschlag bekannt, für die Dauer des Programmentwurfsprozesses vorübergehend eine Fehlerbehandlungsroutine sowie Zuordnungsdaten, welche dem Programmquellcode verständliche Fehlersuchnachrichten zuordnen, auf eine in der Entwicklung befindliche Chipkarte zu bringen. Durch die zusätzlichen Datenelemente wird die Programmentwicklung nachhaltig verbessert, weil sie damit unter Verwendung realer Chipkarten erfolgen kann und nicht auf reine Softwareemulationen angewiesen ist. Die zusätzlichen Datenelemente sind allerdings nicht für reguläre Serienchipkarten vorgesehen.

Aus der US 6,219,828 B1 ist weiter ein Vorschlag zum "Debuggen" von sogenannter "boot firmware", d. h. diejenigen hardwareverankerten Software, die bei Start eines Systems bestimmter Hardwaretests sowie eine Fehlerbehebung ausführt, bekannt. Die vorgeschlagene Lösung beruht auf der Verwendung von zwei Kopien einer boot firmware und ist für übliche Computer vorgesehen.

Aus der WO 00/46665 A2 ist weiter ein Vorschlag zum "exception handling" in virtuellen Maschinen ressourcenbeschränkter Systeme bekannt. Vorgeschlagen wird, jeder Methode ein "exception handling array" zuzuordnen und alle arrays in einer einzelnen "exception handler table" zusammenzufassen. Durch das Konzept soll unter anderem die Stackbelegung zur Laufzeit verringert werden.

Aus dem Artikel "How to Diagnose a Dr. Watson Log Using Microsoft Visual Studio", H. Ortiz, in: Candle Computer Report online, Band 23, Nr. 2, ISSN 1071-2976.2001, ist es weiterhin bekannt, zur Fehlerbehebung ein Debug-Anwendungsprogramm einzusetzen, das Bestandteil einer umfassenden Entwicklungsumgebung ist. Das behandelte Debug-Anwendungsprogramm richtet sich auf die Entwicklung von C++Applikationen und speichert Ergebnisse einer Fehlersuche in einer vorbestimmten Textdatei. Die beschriebene Lösung ist für übliche Computersysteme konzipiert, die keinen Einschränkungen hinsichtlich der zur Verfügung stehenden Hardwareresourcen unterliegen. Für tragbare Datenträger mit erheblicher Ressourcenbeschränkung kommt der Vorschlag deshalb nicht in Betracht.

Die Erfindung hat die Aufgabe, eine für tragbare Datenträger geeignete Technik bereitzustellen, die eine Rückmeldung von Informationen ermöglicht, welche mit einem bei der Installation eines Anwendungsprogrammes in einem tragbaren Datenträger aufgetretenen Fehlerereignis in Beziehung stehen.

Erfindungsgemäß wird diese Aufgabe ganz oder zum Teil gelöst durch ein Verfahren gemäß Anspruch 1, einen tragbaren Datenträger gemäß Anspruch 7 und ein Computerprogrammprodukt gemäß Anspruch 8 beziehungsweise 9. die abhängigen Ansprüche betreffen bevorzugte Ausgestaltungen der Erfindung.

Die Erfindung geht von der Grundüberlegung aus, die gewünschten Informationen über das Fehlerereignis von dem zu installierenden Anwendungsprogramm an ein Diagnoseprogramm zu übergeben. Das Diagnoseprogramm ist als ein weiteres, bereits im Datenträger installiertes Anwendungsprogramm ausgestaltet. Diese erfindungsgemäße Konfiguration ist schon deshalb überraschend, weil der Fachmann für die Behandlung von Fehlern bei der Installation eines Anwendungsprogramms allenfalls eine System-routine des Datenträgers, nicht jedoch ein weiteres Anwendungsprogramm vorsehen würde.

Die Erfindung bietet erhebliche Vorteile im Hinblick auf die Entwicklung von Anwendungsprogrammen für tragbare Datenträger und die Fehleranalyse und Fehlerkorrektur. Ferner hat die Erfindung den besonderen Vorzug, daß sie sich mit sehr geringem Aufwand implementieren läßt. Es ist lediglich erforderlich, ein geeignetes Diagnoseprogramm in den Datenträger einzuspielen und die dann zu installierenden Anwendungsprogramme minimal anzupassen. Systemprogramme des Datenträgers brauchen nicht angepaßt zu werden.

Erfindungsgemäß ist vorgesehen, daß Informationen, die mit dem aufgetretenen Fehlerereignis in Beziehung stehen, an das Diagnoseprogramm übergeben werden. In bevorzugten Ausgestaltungen speichert das Diagnoseprogramm, ansprechend auf die erhaltenen Informationen, Daten über das aufgetretene Fehlerereignis. Ferner ist das Diagnoseprogramm vorzugsweise dazu eingerichtet, eine Antwort zu generieren und auszugeben, die eine Angabe über das aufgetretene Fehlerereignis enthält. Die gespeicherten Daten können mit den an das Diagnoseprogramm übermittelten Informationen übereinstimmen; sie können jedoch auch durch Formatierungs- oder Verarbeitungsschritte aus den übermittelten - und gegebenenfalls weiteren - Informationen abgeleitet werden. Entsprechendes gilt für die Beziehung zwischen den gespeicherten Daten und der in der Antwort enthaltenen Angabe.

Erfindungsgemäß wird das aufgetretene Fehlerereignis in einer Installationsroutine des zu installierenden Anwendungsprogramms gefangen. Unter dem Begriff "Installationsroutine" ist hierbei nicht notwendigerweise nur eine einzige Methode oder Prozedur des Anwendungsprogramms zu verstehen. Vielmehr soll dieser Begriff vorzugsweise alle Befehle und Anweisungen des Anwendungsprogramms umfassen, die im Zusammenhang mit dem Installationsvorgang - einschließlich des Fehlerereignisses und der Fehlerbehandlung - möglicherweise ausgeführt werden können.

In besonders bevorzugten Ausführungsformen ist der Datenträger eine *Java Card* gemäß den einschlägigen Spezifikationen, die von der Firma Sun Microsystems, Inc., herausgegeben werden. Das Anwendungsprogramm ist dann vorzugsweise ein *Java Card Applet.* Die Erfindung ist jedoch auch zum Einsatz bei anderen Datenträgern geeignet, die mehrere Anwendungsprogramme - vorzugsweise sogenannte *Applets* - aufzunehmen vermögen und bei denen ein irgendwie gearteter Mechanismus zur Kommunikation zwischen diesen Anwendungsprogrammen existiert.

Das erfindungsgemäße Computerprogrammprodukt weist in einer ersten Ausgestaltung Programmbefehle auf, die ein Anwendungsprogramm mit der erfindungsgemäßen Funktionalität zur Übergabe von Informationen an ein Diagnoseprogramm implementieren. In einer zweiten Ausgestaltung weist das Computerprogrammprodukt Programmbefehle auf, die ein als Anwendungsprogramm ausgestaltetes Diagnoseprogramm implementieren. Ein solches Computerprogrammprodukt kann ein körperliches Medium sein, beispielsweise ein Halbleiterspeicher oder eine Diskette oder eine CD-ROM, auf der die erwähnten Programmbefehle gespeichert sind. Das Computerprogrammprodukt kann jedoch auch ein nicht-körperliches Medium sein, beispielsweise ein über ein Computernetzwerk übermitteltes Signal. Insbesondere kann das Computerprogrammprodukt bei der Herstellung oder der Initialisierung oder der Personalisierung oder der Anwendung eines tragbaren Datenträgers eingesetzt werden.'

In bevorzugten Ausgestaltungen weisen der Datenträger und/oder das Computerprogrammprodukt Merkmale auf, die den oben beschriebenen und/oder den in den abhängigen Verfahrensansprüchen genannten Merkmalen entsprechen.

Weitere Merkmale, Vorteile und Aufgaben der Erfindung gehen aus der folgenden genauen Beschreibung eines Ausführungsbeispiels und mehrerer Ausführungsalternativen hervor. Es wird auf die schematischen Zeichnungen verwiesen, in denen zeigen:
Fig. 1 ein Blockdiagramm mit Funktionseinheiten eines tragbaren Datenträgers nach einem Ausführungsbeispiel der Erfindung,
Fig. 2 eine schematische Darstellung einer Installationsroutine eines zu installierenden Anwendungsprogramms, und
Fig. 3 ein beispielhaftes Ablaufdiagramm eines abgebrochenen Installationsvorgangs mit anschließender Generierung und Ausgabe einer Antwort, die eine Fehlerangabe enthält.

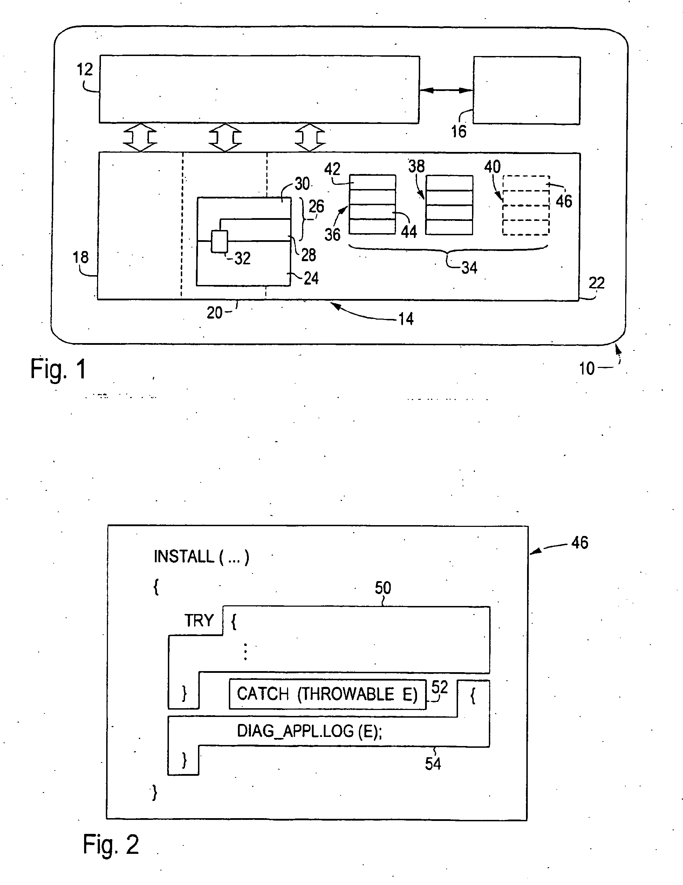

Der in Fig. 1 dargestellte Datenträger 10 ist im vorliegenden Ausführungsbeispiel als Chipkarte gemäß dem *Java-Card-*Standard ausgestaltet. Der Datenträger 10 weist auf einem einzigen Halbleiterchip einen Prozessor 12, einen Speicher 14 und eine Schnittstellenschaltung 16 zur kontaktlosen oder kontaktgebundenen Kommunikation mit einem externen Terminal (nicht gezeigt) auf. Diese Kommunikation erfolgt durch Datenpakete, von denen jedes als APDU *(Application Protocol Data Unit*) bezeichnet wird. Der Speicher 14 ist in mehrere Speicherfelder unterteilt. Im vorliegenden Ausführungsbeispiel sind als Speicherfelder ein als RAM ausgestalteter Arbeitsspeicher 18, ein als ROM ausgestalteter Festwertspeicher 20 und ein als EEPROM ausgestalteter, nicht-flüchtiger Speicher 22 vorgesehen.

Im Speicher 14 - und zwar teils im Festwertspeicher 20 und teils im nicht-flüchtigen Speicher 22 - befindet sich Programmcode, der ein Betriebssystem 24 und eine Laufzeitumgebung 26 implementiert. Das Betriebssystem 24 stellt grundlegende Funktionen bereit, die insbesondere die Speicherverwaltung und die Kommunikation des Datenträgers 10 mit dem externen Terminal betreffen. Die Laufzeitumgebung 26 weist eine virtuelle Maschine 28 auf, die im vorliegenden Ausführungsbeispiel als JCVM (*Java Card Virtual Machine*) ausgestaltet ist. Ferner ist als Teil der Laufzeitumgebung 26 eine Klassenbibliothek 30 vorgesehen, die Anwendungsprogrammierschnittstellen bereitstellt. Ein internes Ladeprogramm 32 ist konzeptuell teils dem Betriebssystem 24 und teils der Laufzeitumgebung 26 zugeordnet.

Der Datenträger 10 ist dazu eingerichtet, mehrere Anwendungsprogramme 34 im nicht-flüchtigen Speicher 22 aufzunehmen. Im vorliegenden Ausführungsbeispiel ist jedes der Anwendungsprogramme 34 als *Java Card Applet* ausgebildet. Jedes Anwendungsprogramm 34 weist mehrere Methoden auf, die in Fig. 1 durch horizontale Unterteilungen angedeutet sind. Insbesondere umfassen die Methoden eine mit *"install"* bezeichnete Methode zur Installation des jeweiligen Anwendungsprogramms 34, eine mit *"process"* bezeichnete Methode zur Bearbeitung eingehender Datenpakete und Methoden mit den Namen *"select"* und *"deselect",* die bei einem Wechsel zwischen den Anwendungsprogrammen 34 aufgerufen werden.

In der Darstellung von Fig. 1 enthält der nicht-flüchtige Speicher 22 drei Anwendungsprogramme 34, nämlich ein Diagnoseprogramm 36, ein bereits erfolgreich installiertes Anwendungsprogramm 38 und ein zu installierendes Anwendungsprogramm 40 (gestrichelt gezeigt). Drei Methoden der Anwendungsprogramme 34 sind in Fig. 1 mit eigenen Bezugszeichen versehen. Dies sind erstens die als Auswahlroutine 42 bezeichnete "*select*"-Methode des Diagnoseprogramms 36, zweitens eine als Aufzeichnungsroutine 44 bezeichnete Methode des Diagnoseprogramms 36, und drittens die als Installationsroutine 46 bezeichnete *"install"-*Methode des zu installierenden Anwendungsprogramms 40.

In der beispielhaften Speicherbelegung des Datenträgers 10 gemäß Fig. 1 ist das Diagnoseprogramm 36 als erstes Anwendungsprogramm 34 bereits erfolgreich installiert worden. Wie im folgenden noch genauer beschrieben wird, übernimmt das Diagnoseprogramm 36 Funktionen des Fehlerloggings und der Ausgabe von Fehlerinformationen. Das Diagnoseprogramm 36 benötigt wenig Speicherplatz und weist eine sehr einfache Struktur auf. Dadurch wird gewährleistet, daß sich das Diagnoseprogramm 36 ohne Fehler in den Datenträger 10 laden und installieren läßt.

Damit das Diagnoseprogramm 36 seine Aufgabe des Fehlerloggings erfüllen kann, sind geeignete Aufrufe in den Installationsroutinen der weiteren Anwendungsprogramme 38, 40 vorgesehen. Fig. 2 zeigt beispielhaft die Struktur der Installationsroutine 46. Die Installationsroutine 46 weist einen Installationsblock 50, einen Fangbefehl 52 und einen Aufrufbefehl 54 auf.

Der Installationsblock 50 ist an sich bekannt. Er führt die üblichen, zur Installation des Anwendungsprogramms 40 erforderlichen Funktionen aus. Der Fangbefehl 52 und der Aufrufbefehl 54 sind jedoch besondere Merkmale des hier beschriebenen Ausführungsbeispiels. Durch den Fangbefehl 52 werden Fehlerereignisse, die bei der Ausführung des Installationsblocks 50 möglicherweise auftreten könnten, gefangen. Wenn dies geschieht, dann wird der Aufrufbefehl 54 ausgeführt, wodurch Informationen über das aufgetretene Fehlerereignis - hier in Form eines Fehlerobjekts E - an die Aufzeichnungsroutine 44 des Diagnoseprogramms 36 übertragen werden. Das Diagnoseprogramm 36 speichert diese Informationen und stellt sie für eine spätere Abfrage zur Verfügung.

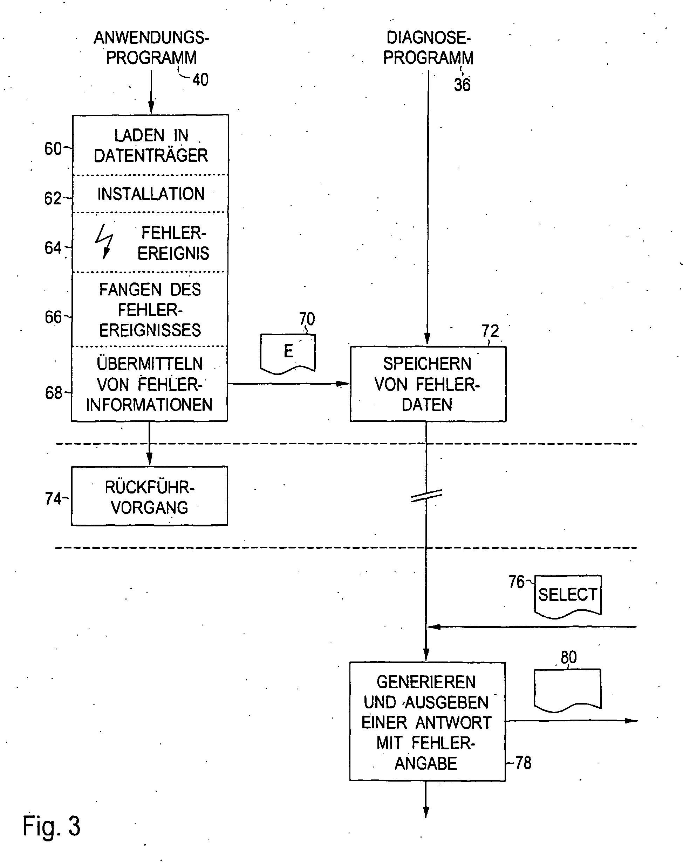

Fig. 3 veranschaulicht nochmals den gerade kurz umrissenen Ablauf der Installation des Anwendungsprogramms 40 mit einem auftretenden Fehlerereignis. Vor der eigentlichen Installation wird das Anwendungsprogramm 40 in Schritt 60 in den Datenträger 10 geladen. Dieses Laden erfolgt auf an sich bekannte Weise, indem zunächst das interne Ladeprogramm 32 selektiert wird. Im Zusammenwirken mit einem externen Ladeprogramm (nicht gezeigt) wird dann der Programmcode des Anwendungsprogramms 40 im sogenannten CAP-Format (CAP = *Card Application*) an den Datenträger 10 übertragen und in den nicht-flüchtigen Speicher 22 eingeschrieben. Kapitel 11 der eingangs bereits zitierten *"Java Card™ 2.2 Runtime Environment* (*JCRE*) *Specification"* beschreibt weitere Einzelheiten dieses Ladevorgangs.

Nach dem Abschluß des Ladevorgangs wird in Schritt 62 die eigentliche Installation des Anwendungsprogramms 40 ausgeführt. Dies erfolgt durch einen Aufruf der Installationsroutine 46, in der der Installationsblock 50 ausgeführt wird. Typische Aufgaben des Installationsblocks 50 sind die Erzeugung einer Instanz des zu installierenden Anwendungsprogramms 40 sowie die Anlage von Objekten und Speicherfeldern, die während der Lebensdauer des Anwendungsprogramms 40 benötigt werden, im nicht-flüchtigen Speicher 22.

Bei einem erfolgreichen Verlauf würde die Installation durch einen Aufruf der Methode *"Applet.register"* der Klassenbibliothek 30 beendet werden. Es soll aber im vorliegenden Beispielsablauf angenommen werden, daß während der Ausführung des Installationsblocks 50 in Schritt 64 ein Fehlerereignis auftritt, weil z.B. nicht genügend Speicherplatz zur Anlage eines neuen Objekts vorhanden ist. Im hier beschriebenen Ausführungsbeispiel hat dieses Fehlerereignis die Form einer Ausnahme *(Exception),* bei deren Auftreten durch die Laufzeitumgebung 26 ein Ausnahmeobjekt E *(Exception Object)* erzeugt wird.

Die aufgetretene Ausnahme führt dazu, daß die Ausführung des Installationsblocks 50 abgebrochen wird. Die Ausnahme wird jedoch in Schritt 66 durch den Fangbefehl 52 gefangen. In Schritt 68 wird dann der Aufrufbefehl 54 ausgeführt, um Fehlerinformationen 70 an das Diagnoseprogramm 36-genauer gesagt, an die als Methode mit dem Namen *"log"* ausgestaltete Aufzeichnungsroutine 44 - zu übertragen. Im vorliegenden Ausführungsbeispiel sind die Fehlerinformationen 70 identisch mit dem Ausnahmeobjekt E. In Ausführungsalternativen kann dagegen vorgesehen sein, daß vor dem Übermitteln der Fehlerinformationen 70 in Schritt 68 noch eine Verarbeitung des Ausnahmeobjekts E stattfindet. Bei einer solchen Verarbeitung können beispielsweise die vom Ausnahmeobjekt E bereitgestellten Daten formatiert oder reduziert werden. Ferner können weitere Informationen, z.B. über den bisherigen Verlauf des Installationsvorgangs oder über Parameter und Eigenschaften des Datenträgers 10, hinzugefügt werden.

Das Übermitteln der Fehlerinformationen 70 an das Diagnoseprogramm 36 in Schritt 68 ist ohne weiteres möglich, wenn sich das Diagnoseprogramm 36 im selben Kontext wie das zu installierende Anwendungsprogramm 40 befindet. Dies ist beim hier beschriebenen Beispiel einer Java-Card-Umgebung immer dann der Fall, wenn die beiden genannten Programme in einem einzigen Programmpaket (*Package*) enthalten sind. Es reicht dann ein einfacher Aufrufbefehl 54 aus, wie er beispielhaft in Fig. 2 gezeigt ist.

Falls sich das Diagnoseprogramm 36 jedoch in einem anderen Kontext als das Anwendungsprogramm 40 befindet, muß die Kommunikation in Schritt 68 über einen geeigneten Mechanismus erfolgen, der von der Laufzeitumgebung 26 bereitgestellt wird. Ein solcher Mechanismus kann beispielsweise eine gemeinsame Schnittstelle (*Shareable Interface*) sein, über die die Fehlerinformationen 70 vom Anwendungsprogramm 40 an das Diagnoseprogramm 36 übergeben werden. Im vorliegenden Beispiel werden die Fehlerinformationen 70 vom Ausnahmeobjekt E gebildet. Der kontextübergreifende Zugriff über ein *Shareable Interface* ist in diesem Fall möglich, weil das Ausnahmeobjekt E ein sogenanntes *JCRE Entry Point Object* ist. Weitere Einzelheiten in diesem Zusammenhang finden sich in Kapitel 6.2 der bereits zitierten *"Java Card*™ *2.2 Runtime Environment (JCRE) Specification".*

In Schritt 72 speichert die Aufzeichnungsroutine 44 des Diagnoseprogramms 36, ansprechend auf die erhaltenen Fehlerinformationen 70, Daten über das aufgetretene Fehlerereignis. Diese Daten können in manchen Ausgestaltungen unmittelbar den empfangenen Fehlerinformationen 70 entsprechen. Im vorliegend beschriebenen Ausführungsbeispiel ist jedoch vorgesehen, daß aus dem als Fehlerinformation 70 übermittelten Fehlerobjekt E die Art und die Ursache des aufgetretenen Fehlers (*error type, error reason*) ermittelt werden. Diese Daten werden - z.B. in Textform - gespeichert. Auch hier können weitere Verarbeitungsschritte vorgesehen sein, bei denen die Daten z.B. neu formatiert oder kodiert oder zusammengefaßt oder mit zusätzlichen Informationen ergänzt werden.

Da die Installation des Anwendungsprogramms 40 fehlgeschlagen ist, führt die Laufzeitumgebung 26 in Schritt 74 einen Rückführvorgang (*roll back*) aus, um den fehlgeschlagenen Installationsversuch rückgängig zu machen. Insbesondere werden während des Rückführvorgangs alle Speicherbereiche, die vor dem Auftreten des Fehlerereignisses in den Schritten 60 und 62 bereits belegt worden sind, wieder freigegeben. In diesem Zusammenhang ist zu beachten, daß das Diagnoseprogramm 36 in Schritt 72 die Fehlerdaten derart speichern muß, daß die gespeicherten Daten durch den Rückführvorgang nicht beeinträchtigt werden. Dies kann beispielsweise dadurch geschehen, daß die Fehlerdaten auf nicht-atomare Weise, also ohne Rücksicht auf eine gegebenenfalls laufende Transaktion, in den nicht-flüchtigen Speicher 22 geschrieben werden.

Nach dem Abschluß des Rückführvorgangs ist jede Spur des Anwendungsprogramms 40 getilgt. Auf die in Schritt 72 gespeicherten Fehlerdaten kann trotzdem über das Diagnoseprogramm 36 zugegriffen werden. Hierzu wird über das externe Terminal ein geeignetes Kommando 76 - z.B. in Form einer *"select"-APDU -* an den Datenträger 10 gegeben. Dieses Kommando 76 bewirkt zunächst eine Aktivierung des Diagnoseprogramms 36 und dann einen Aufruf der Auswahlroutine 42 ("*select*"-Methode) dieses Programms. In Schritt 78 greift dann die Auswahlroutine 42 auf die gespeicherten Fehlerdaten zu und erzeugt daraus eine Antwort 80, die in Form einer geeigneten APDU an das externe Terminal ausgegeben wird.

Die Antwort 80 enthält eine Angabe über das aufgetretene Fehlerereignis, z.B. den Fehlertyp und die Fehlerursache. In unterschiedlichen Ausgestaltungen kann diese Angabe die in Schritt 72 gespeicherten Daten identisch enthalten, oder die Daten können umformatiert oder mit weiteren Informationen ergänzt oder auf wesentliche Informationen reduziert werden. Die Antwort 80 stellt für den Entwickler des Anwendungsprogramms 40 eine bedeutende Hilfe dar, um den aufgetretenen Fehler zu analysieren und in Zukunft zu vermeiden.

In einer Ausführungsvariante wird die Antwort 80 nicht schon in Reaktion auf die Auswahl des Diagnoseprogramms 36 durch eine *"select"-APDU,* sondern erst in Reaktion auf ein weiteres Kommando ausgegeben. Schritt 78 wird in diesem Fall nicht von der Auswahlroutine 42, sondern von einer Verarbeitungsroutine ("process"-Methode) des Diagnoseprogramms 36 ausgeführt.

## Patentansprüche

1. Verfahren zur Behandlung eines bei der Installation eines Anwendungsprogramms (40) in einem tragbaren Datenträger (10) auftretenden Fehlerereignisses, wobei der Datenträger (10) eine Mehrzahl von Anwendungsprogrammen (34) aufzunehmen vermag, **dadurch gekennzeichnet, daß** ein als Anwendungsprogramm (34) ausgestaltetes Diagnoseprogramm (36) im Datenträger (10) installiert ist, und daß das Verfahren die Schritte aufweist:
- Fangen (66) des Fehlerereignisses in einer Installationsroutine (46) des zu installierenden Anwendungsprogramms (40), und
- Übergeben (68) von Informationen (70), die mit dem aufgetretenen Fehlerereignis in Beziehung stehen, von der Installationsroutine (46) an das Diagnoseprogramm (36).

2. Verfahren nach Anspruch 1, **dadurch gekennzeichnet, daß** das Diagnoseprogramm (36) in Abhängigkeit von den ihm übergebenen Informationen (70) Daten speichert (72), die mit dem aufgetretenen Fehlerereignis in Beziehung stehen.

3. Verfahren nach Anspruch 2, **dadurch gekennzeichnet, daß** die vom Diagnoseprogramm (36) gespeicherten Daten nicht-atomar gespeichert werden.

4. Verfahren nach Anspruch 2 oder Anspruch 3, **dadurch gekennzeichnet, daß** das Diagnoseprogramm (36) dazu eingerichtet ist, ansprechend auf ein beim Datenträger (10) eingehendes Kommando (76) eine Antwort (80) zu generieren (78), die eine mit dem aufgetretenen Fehlerereignis in Beziehung stehende und von den gespeicherten Daten abhängige Angabe enthält.

5. Verfahren nach einem der Ansprüche 1 bis 4, **dadurch gekennzeichnet, daß** das Fehlerereignis das Auftreten einer Ausnahme ist, und daß in diesem Zusammenhang ein Ausnahmeobjekt (E) erzeugt wird.

6. Verfahren nach einem der Ansprüche 1 bis 5, **dadurch gekennzeichnet, daß** der Datenträger eine *Java Card* ist, und daß jedes der Mehrzahl von Anwendungsprogrammen (34) ein *Java Card Applet* ist.

7. Tragbarer Datenträger (10), insbesondere Chipkarte oder Chipmodul, mit einem Prozessor (12) und mindestens einem Speicher (14), wobei der Speicher (14) Programmbefehle enthält, die den Prozessor (12) zur Ausführung eines Verfahrens nach einem der Ansprüche 1 bis 6 veranlassen.

8. Computerprogrammprodukt, das mindestens ein maschinenlesbares Anwendungsprogramm (40) für einen tragbaren Datenträger (10) aufweist, wobei das Anwendungsprogramm (40) eine Installationsroutine (46) aufweist, die dazu eingerichtet ist, ein bei der Installation des Anwendungsprogramms (40) in dem tragbaren Datenträger (10) auftretendes Fehlerereignis zu fangen und Informationen, die das aufgetretene Fehlerereignis betreffen, von der Installationsroutine (46) an ein als Anwendungsprogramm ausgestaltetes Diagnoseprogramm (36), das im Datenträger (10) installiert ist, zu übergeben.

9. Computerprogrammprodukt, das mindestens ein maschinenlesbares Anwendungsprogramm (34) für einen tragbaren Datenträger (10) aufweist, wobei das Anwendungsprogramm (34) als Diagnoseprogramm (36) ausgestaltet und dazu eingerichtet ist, Informationen (70), die mit einem bei der Installation eines anderen Anwendungsprogramms (40) in dem tragbaren Datenträger (10) aufgetretenen Fehlerereignis in Beziehung stehen, von einer Installationsroutine (46) des anderen Anwendungsprogramms (40) zu erhalten und in Abhängigkeit von den erhaltenen Informationen (70) Daten über das aufgetretene Fehlerereignis zu speichern.

10. Computerprogrammprodukt nach Anspruch 9, **dadurch gekennzeichnet, daß** das Diagnoseprogramm (36) ferner dazu eingerichtet ist, ansprechend auf ein eingehendes Kommando (76) eine Antwort (80) zu generieren, die eine mit dem aufgetretenen Fehlerereignis in Beziehung stehende und von den gespeicherten Daten abhängige Angabe enthält.

## Claims

1. A method for handling an error event occurring upon the installation of an application program (40) in a portable data carrier (10), wherein the data carrier (10) is able to take up a plurality of application programs (34), **characterized in that** a diagnostic program (36) configured as an application program (34) is installed in the data carrier (10), and that the method has the steps of:
- catching (66) the error event in an installation routine (46) of the application program (40) to be installed, and
- transferring (68) from the installation routine (46) to the diagnostic program (36) information (70) which is connected with the error event that has occurred.

2. The method according to claim 1, **characterized in that** the diagnostic program (36), in dependence on the information (70) transferred thereto, stores (72) data which are connected with the error event that has occurred.

3. The method according to claim 2, **characterized in that** the data stored by the diagnostic program (36) are stored non-atomically.

4. The method according to claim 2 or claim 3, **characterized in that** the diagnostic program (36) is adapted to generate (78), in response to a command (76) incoming to the data carrier (10), a response (80) which contains a specification connected with the error event that has occurred, and dependent on the stored data.

5. The method according to any of claims 1 to 4, **characterized in that** the error event is the occurrence of an exception, and that in this connection an exception object (E) is generated.

6. The method according to any of claims 1 to 5, **characterized in that** the data carrier is a *Java Card,* and that each of the plurality of application programs (34) is a *Java Card Applet.*

7. A portable data carrier (10), in particular chip card or chip module, having a processor (12) and at least one memory (14), wherein the memory (14) contains program instructions which cause the processor (12) to execute a method according to any of claims 1 to 6.

8. A computer program product which has at least one machine-readable application program (40) for a portable data carrier (10), wherein the application program (40) has an installation routine (46) which is adapted to catch an error event occurring upon the installation of the application program (40) in the portable data carrier (10), and to transfer information relating to the error event that has occurred, from the installation routine (46) to a diagnostic program (36) configured as an application program and installed in the data carrier (10).

9. A computer program product which has at least one machine-readable application program (34) for a portable data carrier (10), wherein the application program (34) is configured as a diagnostic program (36) and adapted to receive information (70) which is connected with an error event that has occurred upon the installation of another application program (40) in the portable data carrier (10), from an installation routine (46) of the other application program (40), and to store data about the error event that has occurred, in dependence on the received information (70).

10. The computer program product according to claim 9, **characterized in that** the diagnostic program (36) is further adapted to generate, in response to an incoming command (76), a response (80) which contains a specification connected with the error event that has occurred, and dependent on the stored data.

## Revendications

1. Procédé de traitement d'un événement de défaillance survenant lors de l'installation d'un programme d'application (40) dans un support de données portable (10), le support de données (10) étant apte à recueillir une pluralité de programmes d'application (34), **caractérisé en ce qu'**un programme de diagnostic (36) réalisé sous forme de programme d'application (34) est installé dans le support de données (10) et **en ce que** le procédé comporte les étapes:
- capture (66) de l'événement de défaillance dans une routine d'installation (46) du programme d'application (40) à installer, et
- transmission (68), de la routine d'installation (46) au programme de diagnostic (36), d'informations (70) qui sont en relation avec l'événement de défaillance survenu.

2. Procédé selon la revendication 1, **caractérisé en ce que**, en fonction des informations (70) qui lui sont transmises, le programme de diagnostic (36) mémorise des données (72) qui sont en relation avec l'événement de défaillance survenu.

3. Procédé selon la revendication 2, **caractérisé en ce que** les données mémorisées par le programme de diagnostic (36) sont mémorisées de manière non-atomique.

4. Procédé selon la revendication 2 ou la revendication 3, **caractérisé en ce que** le programme de diagnostic (36) est configuré pour générer (78) en réaction à une commande (76) arrivant au support de données (10) une réponse (80) qui renferme une indication étant en relation avec l'événement de défaillance survenu et étant indépendante des données mémorisées.

5. Procédé selon une des revendications de 1 à 4, **caractérisé en ce que** l'événement de défaillance est la survenance d'une exception, et **en ce qu'**un objet d'exception (E) est généré en relation avec cela.

6. Procédé selon une des revendications de 1 à 5, **caractérisé en ce que** le support de données est une *Java Card,* et **en ce que** chacun de la pluralité de programmes d'application (34) est une *Java Card Applet.*

7. Support de données portable (10), notamment carte à puce ou module puce, comprenant un processeur (12) et au moins une mémoire (14), la mémoire (14) contenant des commandes de programme qui amènent le processeur (12) à exécuter un procédé selon une des revendications de 1 à 6.

8. Produit programme d'ordinateur qui comporte au moins un programme d'application (40) lisible par machine pour un support de données portable (10), le programme d'application (40) comportant une routine d'installation (46) qui est configurée pour capturer un événement de défaillance survenant dans le support de données portable (10) lors de l'installation du programme d'application (40) et pour transmettre de la routine d'installation (46) à un programme de diagnostic (36) réalisé sous forme d'un programme d'application et installé dans le support de données portable (10) des informations qui concernent l'événement de défaillance survenu.

9. Produit programme d'ordinateur qui comporte au moins un programme d'application (34) lisible par machine pour un support de données portable (10), le programme d'application (34) étant réalisé sous forme de programme de diagnostic (36) et étant configuré pour recevoir des informations (70) qui sont en relation avec un événement de défaillance survenu dans le support de données portable (10) lors de l'installation d'un autre programme d'application (40) de la part d'une routine d'installation (46) de l'autre programme d'application (40), et pour mémoriser en fonction des informations reçues (70) des données concernant l'événement de défaillance survenu.

10. Produit programme d'ordinateur selon la revendication 9, **caractérisé en ce que** le programme de diagnostic (36) est en outre configuré pour générer, en réaction à une commande (76) arrivante, une réponse (80) qui renferme une indication étant en relation avec l'événement de défaillance survenu et étant indépendante des données mémorisées.
